(19)

Europäisches
Patentamt
European
Patent Office
Office européen
des brevets

(11) **EP 2 247 007 A1**

(12) **EUROPEAN PATENT APPLICATION**

(43) Date of publication:
**03.11.2010 Bulletin 2010/44**

(51) Int Cl.:
*H04H 60/64* *(2008.01)*          *H04H 60/31* *(2008.01)*

(21) Application number: **09159222.0**

(22) Date of filing: **30.04.2009**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(71) Applicant: **TNS Group Holdings Ltd
London W5 1UA (GB)**

(72) Inventor: **The designation of the inventor has not
yet been filed**

(74) Representative: **Sunderland, James Harry
Haseltine Lake LLP
Lincoln House
300 High Holborn
London
WC1V 7JH (GB)**

(54) **Audience analysis**

(57)     An audience analysis system comprises a plurality of households and an audience monitoring facility. In each household there can be received a plurality of selectable channels and there a channel selector device operable to select one channel, and a presentation device operable to present the selected channel, the channel selector device providing data indicating which channels are selected and when they are selected, to provide raw data indicating lengths of time for which selected channels remained selected. Each household has means for returning said data to the audience monitoring facility. This facility includes a data processor adapted to subject raw data from the households to a procedure in which information in the raw data relating to the lengths of time for which channels remained selected is subjected to capping, whereby the indicated length of time for which a channel remained selected is reduced if the indicated length of time exceeds a capping threshold length of time. The data processor is further operable to suspend capping of raw data relating to a length of time for which a channel remained selected when the data processor determines that the raw data is more representative of household attention to presentation of the selected channel than is capped data, the data processor effecting this determination when the raw data from all the households of the system which selected the channel concerned is determined to provide similar indications of lengths of time, exceeding an otherwise applicable capping threshold length of time, for which the channel concerned remains selected.

FIG. 1

EP 2 247 007 A1

**Description**

Field of the Invention

The present invention relates to audience analysis, for example the analysis of the audience viewing television in the home.

Background of the Invention

Traditional TV audience measurement/analysis systems make use of so-called "people meters" installed in a panel of households, chosen such that their occupants are demographically representative of the population as a whole. This technique is robust when analysing the audience to major channels by major demographic groupings (all men or all housewives for example). However, the widespread introduction of multi-channel program services, for reception via digital cable and/or satellite for example, and thus the availability of many channels, including minority-interest channels, has created a need for improved audience measurement/analysis system which can reliably analyse the audience even to minority-interest channels, and in particular can provide analysis by more specific demographic groupings (such as females aged 16 to 24). Using the traditional analysis system for this would require, to provide reliable minority channel/ specific demographics, a very large "people meter" panel size, which in practice would become unaffordable.

However, the change that causes the problem - the widespread introduction of multi-channel program services, for reception via digital cable and/or satellite for example - also offers the potential for a solution of the problem.

As is well known, digital program receivers such as digital satellite receivers and cable boxes (hereafter Set Top Boxes or STBs) can usually transmit data back to the system operator, typically either via the "back channel" of the cable system or via a telephone line connection. This feature is primarily provided to allow interactive TV services to be implemented, including for example pay-per-view. Such STBs can also run software applications, pre-loaded in the STBs or downloaded over the cable or over the air to the STBs. It is possible to pre-load, for example as firmware, or download software to STBs that can record, and then transmit back to the system operator, details of the channels selected from time to time by the viewer. This can be done for a very large number of STBs; if necessary for the whole subscriber base of households using the STBs of a system operator or service provider.

Such data can form part of the information needed to generate audience figures and carry out audience analysis. Because of the potentially very large sample size, the data offers the prospect of providing audience measurement/ analysis based on data from a far greater number of households than is feasible with traditional panel systems.

However, data from STB's is of itself insufficient to allow detailed audience analysis.

One issue is that the STB data does not reveal when the TV to which the STB is connected was switched on and off. STBs are very typically left on permanently, so at the end of a viewing session the TV may be switched off but the STB continues to be tuned to the last channel watched. This means that channel viewing data from STB's provides, or almost certainly provides, a false indication of actual viewing of the TV. The integrity or value of the STB viewing data, even as household viewing information, is impaired.

This issue was addressed in European patent application No. 04256151.4, which was concerned with the problem which results when a presentation device, for example a TV, may be switched off even though the channel selector device, for example an STB, remains on and continues to provide channel selection information.

That application disclosed, inter alia, a method of analysis of the audience for channels selectable by a channel selector device for presentation on a presentation device, the channel selector device providing data indicating which channels are selected and the lengths of time for which selected channels remain selected, the method comprising subjecting the data relating to the lengths of time for which channels remain selected to a capping procedure, whereby the indicated length of time for which a channel remains selected is reduced to a capped maximum permitted length of time if the indicated length of time exceeds the maximum permitted length, to provide capped data.

The respective capped maximum permitted lengths of time could be provided for each selectable channel, or possibly for respective groups of selectable channels, so that different capped maximum permitted lengths could be applied to data relating to different channels or different channel groups. Further, respective capped maximum permitted lengths of time could be provided for each selectable channel or channel group for different time of day periods and/or different days of the week, so that different capped maximum permitted lengths could be applied to data relating to different time of day period and/or days of the week.

Thus, where the channel selector device is an STB and the presentation device a TV, STB data from multiple households, which may be a very large number of households or even a complete subscriber base, could be used to generate what can be said to be the equivalent of homes viewing data normally obtained by metering TV set(s) in the households.

This was achieved by dealing with instances when the TV set has been switched off but the STB has been left on, as may happen when the household has been viewing at breakfast time and the TV set, but not the STB, is turned off when people leave to go to work, or the similar situation that may occur at the end of the day when people go to bed. This problem was overcome without the need for the TV viewing members of a household to change their behaviour, i.e. always remember to turn off the STB at the same time as the TV, and without the need for additional technical means in the household such as would ensure that the STB is turned off when the TV is turned off.

Although the capping procedure mentioned above has proved to be remarkably effective in providing refined data allowing audience analysis to be more accurately carried out on the basis of STB data, rendering the product of the analysis more useful and commercially valuable, the inventors have had the insight that in some circumstances the capping procedure mentioned above can be improved to increase the veracity of the audience analysis data. The inventors have further had insights as to how such increased veracity can be provided again without the need for the TV viewing members of a household to change their behaviour and without the need for additional apparatus in the household such as would ensure, for example, that the STB is turned off when the TV is turned off.

Summary of the Invention

The inventors have had the insight that different capped maximum permitted lengths of time are better provided not merely, for example, for each selectable channel or channel group for different time of day periods and/or different days of the week, but also in dependence upon the originally indicated length of time for which a channel remains selected. That is, the a capped length of time may depend upon the uncapped length of time for which a channel remains selected, for example the capped length of time increasing in relationship to the uncapped length of time.

Further, the inventors have realized that a "Monte Carlo" technique can advantageously be used. That is, rather than setting a maximum permitted uncapped length of time, beyond which capping is always applied (either capping to a length predetermined in dependence upon channel, channel group, day or time of day, or determined also in dependence upon the uncapped length) but below which capping is never applied, a "probability of capping" factor can be applied to uncapped lengths of time below a set maximum permitted uncapped length of time. This means that although all uncapped lengths of time above the set maximum are capped (on some basis), i.e. are capped with a probability of 1.0, lengths of time below the set maximum may also be subject to some probability of being capped, less than 1.0 but the probability increasing as the set maximum is approached. The applied probabilities of capping of lengths of time can be selected or "tuned" (for example also in dependence upon channel, channel group, day or time of day) to increase veracity of the resulting viewing data.

The inventors have had the further insight that some lengths of time (i.e. lengths of time which would ordinarily be subject to capping) for which channels remain selected may in fact reflect actual TV channel viewing (or audio channel listening) in a household, albeit that viewing (listening) for such lengths of time is generally atypical, such that these lengths of time should not be capped. Moreover, the inventors have had the insight that these atypical lengths of time, which should not be capped, can be identified subtly and effectively, and without need for additional apparatus.

According to an aspect of the invention there is provided an audience analysis system comprising a plurality of households and an audience monitoring facility, wherein:-

- in each of the plurality of households there can be received a plurality of selectable channels and there is provided a channel selector device operable to select from time to time one channel from amongst the plurality of channels, and a presentation device operable to present the selected channel to the household, the channel selector device providing data indicating which channels are selected and when channels are selected, thereby providing raw data indicating lengths of time for which selected channels remained selected, each household having means for returning said data to the audience monitoring facility,

- the audience monitoring facility including a data processor adapted to subject raw data returned from each of the plurality of households to a procedure in which information in the raw data from a household relating to the lengths of time for which channels remained selected by the channel selector device in the household concerned is subjected to capping, whereby the indicated length of time for which a channel remained selected is reduced if the indicated length of time exceeds a capping threshold length of time,

- the data processor being further operable to suspend such capping of raw data relating to a length of time for which a channel remained selected in a household when the data processor determines that the raw data concerned is more representative of household attention to presentation of the selected channel on the presentation device than is capped data, the data processor effecting this determination when the raw data from all the households of the system which selected the channel concerned is determined to provide similar indications of lengths of time, exceeding an otherwise applicable capping threshold length of time, for which the channel concerned remained selected.

According to another aspect of the present invention there is provided an audience analysis system comprising a plurality of households and an audience monitoring facility, wherein:-

- in each of the plurality of households there can be received a plurality of selectable channels and there is provided a channel selector device operable to select from time to time one channel from amongst the plurality of channels, and a presentation device operable to present the selected channel to the household, the channel selector device providing data indicating which channels are selected and when channels are selected, thereby providing raw data indicating lengths of time for which selected channels remained selected, each household having means for returning said data to the audience monitoring facility,
- the audience monitoring facility including a data processor adapted to subject raw data returned from each of the plurality of households to a procedure in which information in the raw data from a household relating to the lengths of time for which channels remained selected by the channel selector device in the household concerned is subjected to capping, whereby the indicated length of time for which a channel remained selected is reduced to a capped length if the indicated length of time exceeds a capping threshold length of time, the capped length depending on the amount by which the capping threshold length of time is exceeded.

According to a further aspect the present invention there is provided an audience analysis system comprising a plurality of households and an audience monitoring facility, wherein:-

- in each of the plurality of households there can be received a plurality of selectable channels and there is provided a channel selector device operable to select from time to time one channel from amongst the plurality of channels, and a presentation device operable to present the selected channel to the household, the channel selector device providing data indicating which channels are selected and when channels are selected, thereby providing raw data indicating lengths of time for which selected channels remained selected, each household having means for returning said data to the audience monitoring facility,
- the audience monitoring facility including a data processor adapted to subject raw data returned from each of the plurality of households to a procedure in which information in the raw data from a household relating to the lengths of time for which channels remained selected by the channel selector device in the household concerned is subjected to capping, whereby the indicated length of time for which a channel remained selected is reduced with a probability factor of unity to a capped length if the indicated length of time exceeds a capping threshold length of time, and if the indicated length of time for which a channel remained selected is below the capping threshold length of time the indicated length of time may be reduced, with a probability factor of less than unity, the probability factor increasing the longer is the indicated length of time.

Two or more aspects of the invention can be combined in one audience analysis system.

The present invention provides corresponding methods of audience analysis of the audience.

Brief Description of the Drawings

Fig. 1 schematically illustrates a system in which multi-channel program services, for reception via digital cable and/or satellite for example, are delivered to households;

Fig. 2 is a graph illustrating a typical distribution of lengths of viewing sessions as determined on the basis of STB data alone and as determined on the basis of STB data and TV set data;

Fig. 3 is a graph illustrating assessed viewing rating by daypart as determined on the basis of STB data alone

and as determined on the basis of STB data and TV set data, for typical viewing sessions;

Fig. 4 is a graph illustrating how viewing rating by daypart as determined on the basis of STB data alone needs to be modified, for typical viewing sessions, to provide a match with viewing rating as determined on the basis of STB data and TV set data;

Fig. 5 schematically illustrates a capping operation for typical viewing sessions;

Fig. 6 shows a graph which illustrates how atypically extended viewing sessions can be identified.

Detailed Description

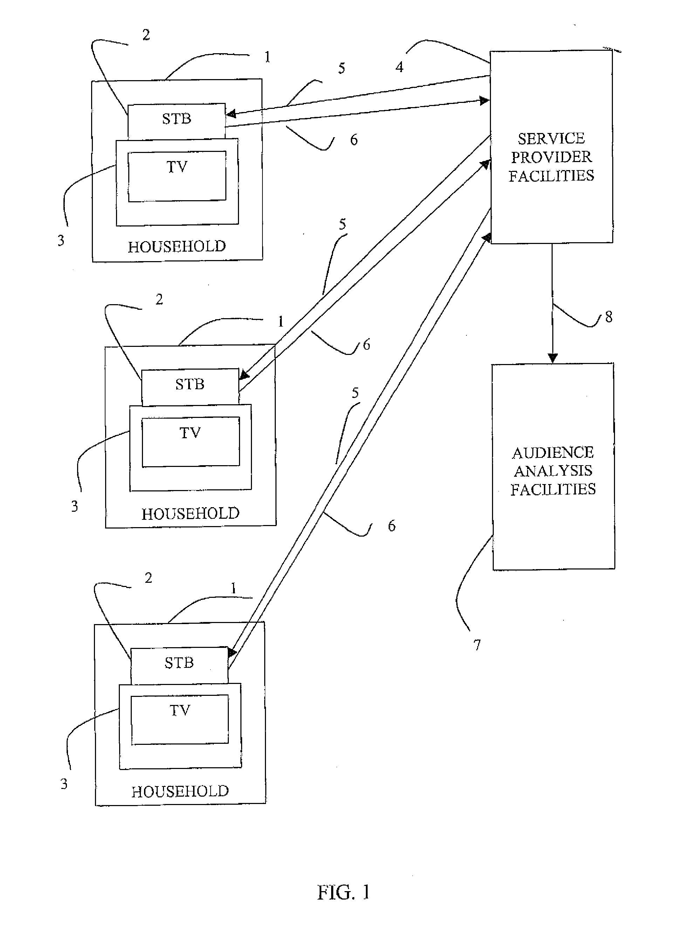

Figure 1 schematically illustrates a system in which multi-channel program services, for reception via digital cable and/or satellite for example, are delivered to households which provide the audience which is to be analysed. In each household 1 there is provided a channel selector device, for example a so-called Set Top Box or STB 2, by means of which a particular program or channel of those available can be selected by individual members of the household 1 for presentation on a presentation device, for example a TV 3 in the household. Although Figure 1 shows only three households 1 it will be understood that in reality very many households may be part of the system.

The programs or channels available, in this case TV channels, are provided by a service provider or system operator to all these households from service provider facilities 4, those facilities for example comprising studios, base stations, uplink transmitters, central offices etc., and are delivered to the households by a delivery network providing signal transmission paths schematically indicated by arrow 5, which may be a cable-based or satellite-based transmission path for example.

In this example system, each channel selector device or STB 2 in the system is capable of returning information to the service provider facilities 4 via a return path, schematically indicated by arrow 6. This return path 6 is typically, provided either via the "back channel" of the cable-based system or via a telephone line connection in the case of a satellite-based system, or any other suitable communication path. In particular, the channel selector device or STB 2 is capable of returning information or data indicating channels or programs selected by the STB 2 at different times.

This returned information can be employed for analysis of the audience represented by the households 1 concerned, and for this purpose may be passed on from the service provider facilities 4 to audience analysis facilities 7, as schematically indicated by arrow 8. Of course the facilities 7 may be colocated with or incorporated in the service provide facilities in some cases. It is alternatively possible in some cases that information may be returned, for example via telephone line communication or via the Internet or by any other suitable means, to the audience analysis facilities 7 rather than the service provider facilities 4.

The returned information from the channel selector device, i.e. the STB data, fundamentally indicates only the channels or programs selected at that device or STB over time, for example the time of each selection of a different channel. Each such selection of a different channel is called a "switch away" event, since each selection involves switching away from the current channel to some other channel. Incidentally, the returned information may be returned "live", i.e. as each different channel is selected, or perhaps more usually may be stored in the STB and returned intermittently, for instance via a telephone line, at intervals, for example once per day, depending upon the system concerned.

As indicated above, one issue is that the returned information or STB data does not reveal when the TV 3, to which the STB 2 is connected in a household 1, was switched on and off. It is known from experience that STBs 2 are very typically left on permanently, so at the end of a viewing session the TV 3 may be switched off but the STB 2 continues to be tuned to the last channel watched. This means that the STB data provides only a distorted indication in particular of the lengths of time for which selected channels are actually being presented to the audience members in a household, viewing the TV 3, the latter length-of-time information being the information needed for basic audience analysis.

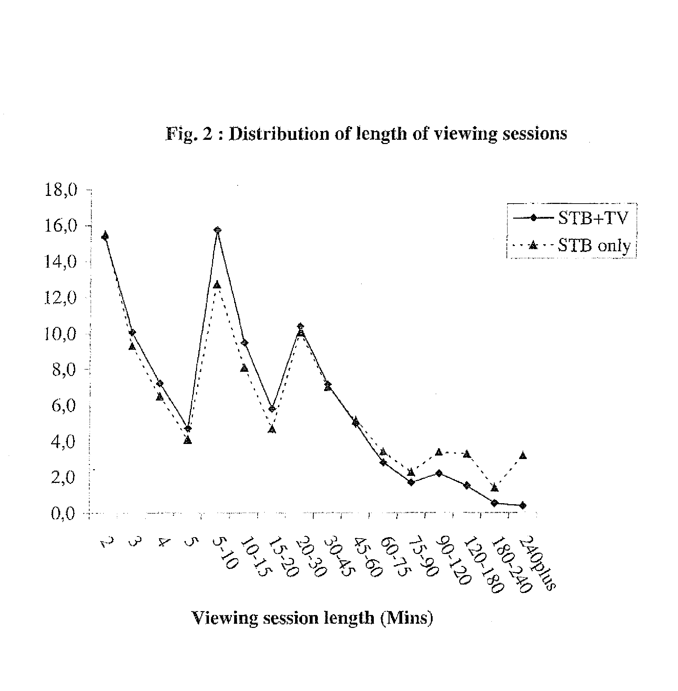

From studies carried out it has been determined that most viewing sessions are in fact of quite short duration and very long sessions tuned to the same channel are comparatively rare occurrences. This is illustrated in Fig. 2, which merely by way of example shows the distribution of lengths of viewing sessions (viewing of any available channel) derived from a sample of 514 households viewing for one day.

In this study, in each of the 514 households 1, viewing was measured by monitoring both the STB 2 and the TV set 3 itself. Thus, it was possible to compare differences in "viewing" as recorded by the STB alone (i.e. STB on, TV may be on or off) versus viewing defined by both the STB and TV set being on.

In summary the data collected indicated that:

    1. The average viewing session (excluding very short sessions of under 2 min) measured by STB+TV is 22.4 minutes whereas for STB alone it is 40.4 minutes.

    2. All of this difference is accounted for by very long sessions.

For STB + TV only 9% of sessions last longer than an hour whereas STB alone has 17% sessions lasting for more than an hour. The difference is even more marked for sessions lasting longer than 3 hrs; less than 1% for STB+TV and 4.6% for STB alone.

Thus, whilst the number of very long viewing sessions is small, it was found that they do have a profound effect on the average session length, to an extent that was not anticipated, and that this in turn significantly affected analysis.

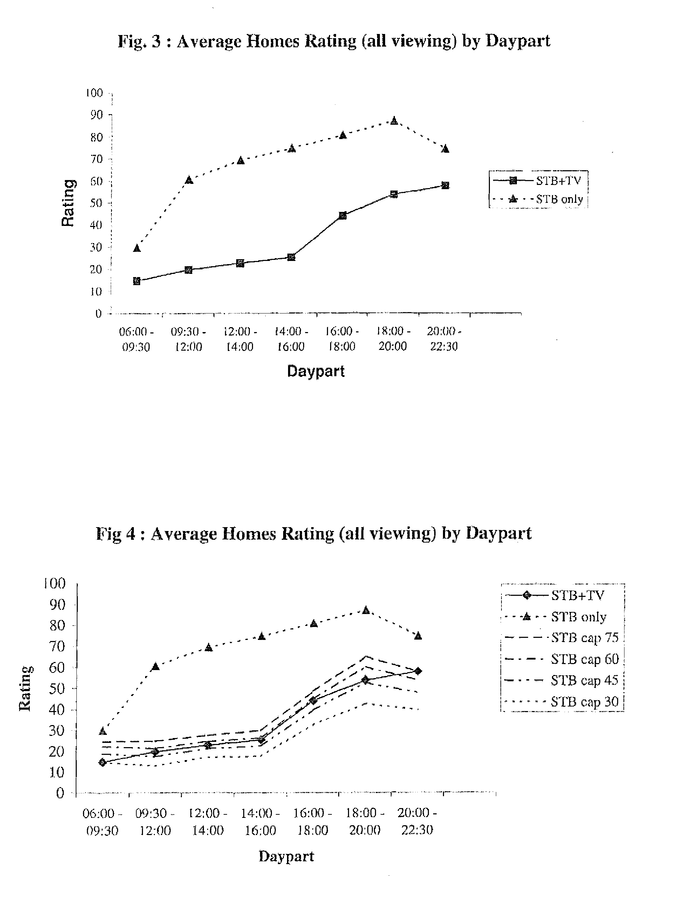

This is illustrated in Fig. 3, which shows the average homes rating (viewing to all channels) by daypart (i.e. different periods of time over the course of a day as indicated in the Figure) calculated using STB+TV data versus that using only STB data. Because a number of households 1 leave their STB 2 switched on after they have turned the TV off 3 there is a sizeable discrepancy between the two.

The problem presented by this can be overcome, at least to a great degree, by a method in which the "raw" STB data is modified or refined to enhance its value for audience analysis, and that this can be achieved without making provisions in the households for ensuring that switching off the TV set always causes the STB to be switched off, and without need for making provisions in the households for monitoring whether the TV set is on or off.

The "raw" STB data is effectively edited in such a way that very long STB sessions are capped after a given interval. In other words, the TV will be assumed to have been turned off if the STB has been tuned to the same channel uninterrupted for more than the capped duration limit. Surprisingly, this procedure provides an effective way of dealing with the problem outlined above, removing a substantial part of the distortions caused by the problem and thus providing refined data which allows audience analysis to be more accurately carried out on the basis of STB data, rendering the product of the analysis more useful and commercially valuable.

The effect of using STB data editing rules was tested for a variety of capping limits or thresholds ranging from 75 minutes down to 30 minutes. The results are shown in Fig. 4.

From this Figure, it is clear that capping the excessive STB session lengths can radically improve the calculation of the homes rating. For example, a cap of 75 minutes gives perfect agreement between capped STB and STB+TV calculated homes ratings during the 20.00-22.30 daypart. A shorter capping limit or threshold of 30 minutes is required to match the STB+TV rating during breakfast time 6.00-9.30.

Based on just this one day of data, the session length capping limits for different dayparts which could be applied in accordance with the present invention would be:

| Daypart | Capping limit (mins) |
|---|---|
| 06.00-09.30 | 30 |
| 09.30-12.00 | 54 |
| 12.00-14.00 | 52 |
| 14.00-16.00 | 58 |
| 16.00-18.00 | 54 |
| 18.00-20.00 | 58 |
| 20.00-22.30 | 75 |
| 22.30-25.00 | N/A |

The analysis of data reported here shows that even relatively simple editing rules applied to "long" viewing sessions will at least to a large extent successfully deal with the potential problem of "over-reporting" the household viewing using only the STB data.

Editing or capping can be developed beyond the simple rules indicated above to allow greater dimensionality and a greater degree of refinement. For example, capping limits or thresholds may be set which are based not only on, or vary not only with, daypart or time of day, but are also based on other parameters. For example, capping limits or thresholds may be set taking into account the channel selected, or the channel group selected, and/or the day of the week.

Providing for the determination of capping limits or thresholds in dependence upon a variety of parameters can allow for the capping procedure to be easily adjusted in the light of new information, changes of audience behaviour, and different audience behaviours in connection with different types of service being provided to the audience concerned. For instance, the behaviour of the audience for radio channels or programs delivered a service provider may differ significantly from that of the audience for TV channels provided by the service provider.

What is in effect a capping "matrix" taking into account all the different parameters considered can be provided and be applied appropriately to yield an advantageous improvement in audience analysis based on STB data.

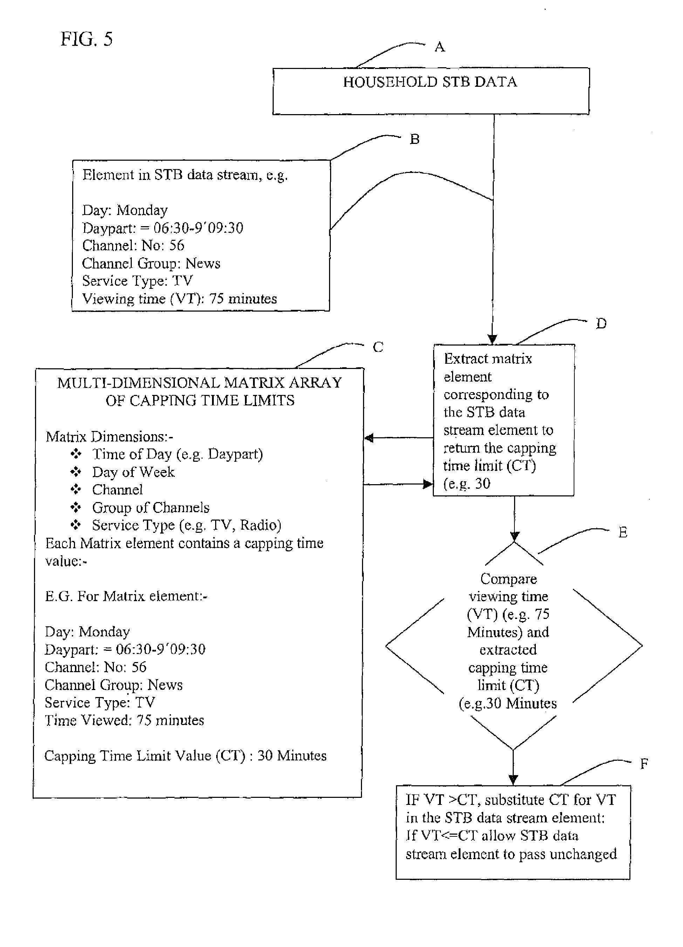

An example of this is schematically illustrated in Figure 5, which shows that for household STB data A, each element B in the STB data stream is used effectively as a key to access a specific element of a multi-dimensional matrix C of capping time limits or thresholds. Depending on the key information in the element B of the STB data stream (e.g. the particular day, daypart, channel (or channel group), and service type, an element of matrix C is extracted to yield a specific capping time limit or threshold CT, for example 30 minutes) to be applied to the element B in the STB data stream. Then, the viewing time VT indicated in the element B in the STB data stream (for example 75 minutes) is compared E with the capping time limit CT. If it is found F that VT>CT the element B is modified by substitution of CT (30 minutes) for the original VT (75 minutes), for subsequent audience analysis purposes. If, on the other hand, it is found that VT<=CT the element B is passed on unmodified for subsequent audience analysis purposes.

A method of applying capping limits to "raw" STB data of viewing sessions, in particular applying capping limits appropriately selected from a multi-dimensional matrix of capping limit values as outlined above, can yield information capable of useful, and hence valuable analysis. Further, although the volume of "raw" STB data presented by the households 1 - of which there may be many thousands - may be massive, the method can readily be applied, demanding resources in terms of computational power etc. which are well within the bounds of economic and technical realities.

Further, capping limits applied to STB audience analysis can be refined and updated as necessary on the basis of reference information data obtained from other sources which do not rely, or do not rely entirely, on STB data, which can enable the variability of viewing session length in dependence upon each of the parameters considered to be determined and taken into account to provide greater audience analysis accuracy. Such reference information may be obtained for example by de-constructing existing audience data from the other sources, to remove any individuals element present in that data, to replicate STB data (i.e. household data).

The inventors have had the insight that the capping procedure described above can be further improved, as indicated below.

In the above-described capping procedure different capped maximum permitted lengths of time, i.e. capping thresholds, are provided for example from a multi-dimensional matrix of capping limit or threshold values (indicating for instance different capping limit or threshold values for each selectable channel or channel group for different time of day periods and/or different days of the week). When an applicable capping threshold value is exceeded the uncapped length of time for which a channel remains selected is reduced to the capping threshold value. Now, in the improved procedure, the reduced or capped length of time may not correspond to the capping threshold value but to a value dependent upon the originally indicated length of time for which a channel remains selected. Thus, when a capping threshold value is exceeded, the originally indicated length of time for which a channel remains selected may not be reduced to the capping limit value but to a capped length of time depending upon the uncapped length of time for which a channel remains selected. As indicated a capping limit value now acts as a threshold above which capping is applied. For example the capped length of time may increase in relationship to the uncapped length of time. Alternatively, a capping distribution may be applied for example such that if the capping threshold is exceeded by a small amount of time or by a large amount of time the capped length of time applied corresponds to the capping threshold, whilst if the capping threshold is exceeded by some intermediate amount of time the capped length of time is greater than the capping threshold. It is possible that an appropriate form of distribution could be determined by de-constructing existing audience data from the other sources.

Further, the inventors have realized that a "Monte Carlo" technique can advantageously be used. That is, rather than setting a capping limit or threshold value beyond which capping is always applied (either capping to a length predetermined in dependence upon channel, channel group, day or time of day, or determined also in dependence upon the uncapped length) but below which capping threshold value capping is never applied, a "probability of capping" factor can be applied to uncapped lengths of time below a set capping threshold. This means that although all uncapped lengths of time above the set threshold are capped (on some basis), i.e. capped with a probability of 1.0, lengths of time below the set threshold are also subject to some probability of being capped, less than 1.0 but the probability increasing as the set threshold is approached. In this context, a lower limit length of time may be set below which capping is not applied (i.e. probability of capping = 0). The applied probabilities of capping of lengths of time can be selected or "tuned" (for example also in dependence upon channel, channel group, day or time of day) to increase veracity of the resulting viewing data. It is possible that an appropriate form of "tuning" could be determined by de-constructing existing audience data from the other sources.

Beyond this, however, the inventors have realized that a phenomenon can occur which renders the application of a capping inappropriate, since the capping itself may in some circumstances reduce the accuracy with which viewing session lengths are indicated. This phenomenon, which does not affect the overall value of capping techniques, arises in circumstances which cannot be estimated in advance, for example from reference information data as mentioned above, and so cannot be built into the capping "matrix" or a capping distribution or a "probability of capping" factor.

Merely by way of example, circumstances in which the phenomenon - atypically extended viewing time - can arise may occur when a popular sporting event is being shown, such as a soccer or football game. The program showing the game may last for two hours or more. It has been observed that fans of the game may stay tuned to the program for the whole of that time. Normally, viewing sessions of such a length of time would be subject to capping, but in the circumstances capping would be inappropriate. Of course, the phenomenon of atypically extended viewing time can arise not only in relation to sporting events.

The problem for audience analysis is how to identify when the phenomenon of atypically extended viewing time can be considered to have occurred, so that capping can be suspended appropriately, to provide even more accurate viewing data for audience analysis. One way of doing this might be to study program schedules in advance and, in effect, make guesses as to which programs, such as soccer or football matches, may give rise to the phenomenon. However, this would be onerous and otherwise unsatisfactory for a variety of reasons, and most likely would not be effective in relation to minority interest programming.

The inventors have had the insight that the phenomenon can be identified in a subtle and reliable manner from the viewing data (e.g. STB data) itself without any need for foreknowledge of program schedules or guesses as to which particular programs might give rise to the phenomenon.

Very crudely expressed, by considering viewing session lengths across different households in the system the phenomenon of atypically extended viewing time can be identified. That is, if an unusually high proportion of households in the system provide viewing data which indicates some coincidence of (atypically) extended viewing times for the same program or channel then it can be presumed that extended viewing has in fact occurred and capping should be suspended for the relevant viewing data for the channel or program concerned.

The inventors have further had the insight that an additional positive indicator of extended viewing can be found in "switch away" information relating to the end of (apparently) extended viewing sessions. "Switch away" information, as mentioned above, is inherently provided by the viewing data (e.g. STB data) which is collected from the households in the system. A "switch away" event is simply a change of viewed channel in a household. In the viewing data collected from a household in the system, the occurrence and timing of "switch away" events define the lengths of viewing sessions for the household. By considering coincidence of switch away events across different households in the system, the switch away events relating to the ends of (apparently) extended viewing sessions, the phenomenon of atypically extended viewing time can be more reliably identified. It is believed that this might be understood in the following way. Considering the example of a soccer or football game, it may be considered to be unlikely that fans will switch to the channel or program showing the game more or less all at the same time. Rather, they will switch to the channel at a variety of times in the run up to the actual start of the game, perhaps depending on whether they are interested in pre-game commentary or whether there is another program competing for their attention. For this reason, switch away events at the start of the game (i.e. viewers switching away from other channels to the channel carrying the game) may be a less reliable indicator of atypically extended viewing, being rather diffuse in time and more subject to "noise". However, switch away events at the end of the game can be expected to exhibit strong coincidence and provide a reliable confirmatory indicator of atypically extended viewing. In practice, this has proved to be a sensitive and dependable indicator.

Beyond this, the inventors have recognized that coincidence of extended viewing times and switch away events across households in the system is subject to "noise". That is, apparent coincidences could arise simply as random occurrences having no real significance, perhaps particularly in relation to minority interest programs (for example, rather than a soccer or football game, a less popular sporting event).

The present invention further provides for the use of techniques which enable random occurrences to be filtered out and atypically extended viewing phenomena to be identified even more reliably.

Particularly preferred are techniques based on analysis of switch away events.

In one example, the occurrence of switch away events for all channels, in the viewing data collected from households in the system, is considered. For example, over a viewing day, the occurrence of all switch way events, relating to all channels, is counted for each unit of time over the day. A unit of time may be determined in accordance with the temporal resolution required for analysis of the viewing data, for example a unit of time may be five or ten minutes, or more or less. Thus, for each unit of time an expected rate of switch away events, across all channels, is calculated. Then, for each unit of time and each channel, the occurrence of actual switch away events for the channel concerned is compared with the expected rate, and significant deviations from the expected rate relating to the ends of (apparently) extended viewing sessions, are considered to verify that the phenomenon of atypically extended viewing time has actually occurred for the channel concerned (and capping is suspended for the channel and atypically extended viewing times concerned).

This has the advantage that only a single (the present) viewing day is considered. Historical data relating to prior days need not be stored.

Significant deviations from the expected rate of switch away events may be identified by any of a number of measures. For example, a threshold may be set such that a significant deviation from the expected rate is considered to have occurred if, in a unit of time, the observed switch away rate for a channel is greater than a predetermined multiple of the all-channel expected rate for the unit of time concerned.

Alternatively, an average expected switch away rate may be considered for a whole day or a daypart and a significant deviation from the expected rate considered to have occurred if, in a unit of time, the observed switch away rate for a channel is more than a predetermined number of standard deviations away from the average expected rate.

Preferably, however, significant deviation from and expected "switch away" rate is identified by using a "chi squared" test. This has been found to provide for particularly reliable results.

The "chi squared" test, in this context, is of the following general form:

$$\text{"chi squared indicator"} = \frac{[(\text{Observed}) - (\text{Expected})]^2}{(\text{Expected})}$$

Where "Observed" and "Expected" relate to switch away rates.

That is, where expected switch away rate is based on all channels and is provide per unit of time, the test is of this form:

"chi squared indicator" =

$$\frac{[(\text{Observed switch away rate for }) - (\text{Expected switch away rate for })]^2}{[(\text{specific channel in unit of time}) \qquad (\text{all channels in unit of time })]}$$

(Expected switch away rate for)

(all channels in unit of time )

As mentioned above, other (e.g. average) expected switch away rates may be used, for example for dayparts and or for groups of channels (e.g. a group of sports channels").

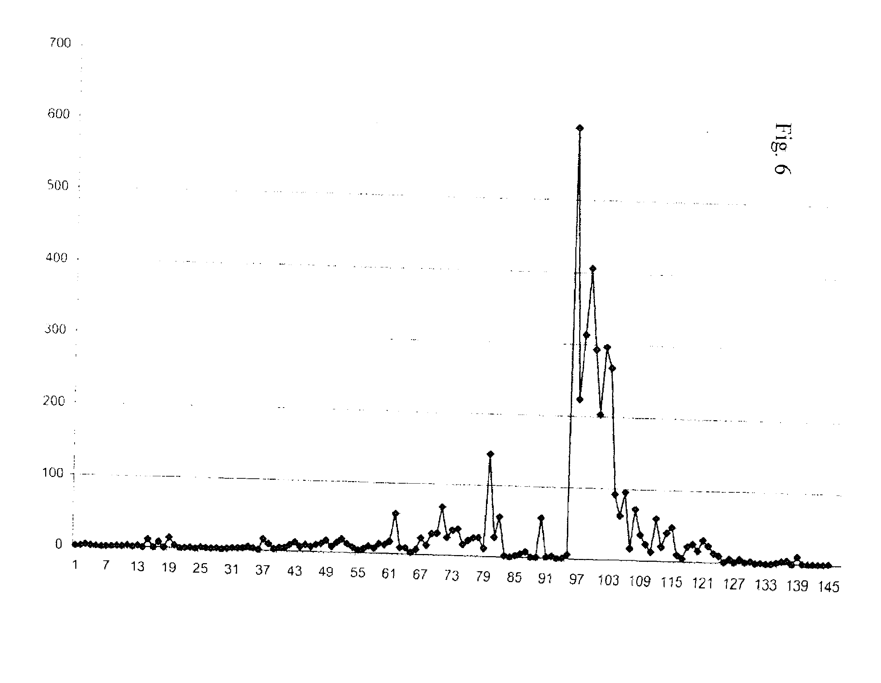

Figure 6 provides a graph illustrating the value of the "chi squared indicator" for a particular channel over a period of time over the course of a day (indicated along the x-axis as successive numbered units of time from 1 to 145, each unit of time in this case being 10 minutes, by way of example and for simplicity of illustration. Chi squared indicator values are indicated on the y-axis. The values may be normalized or scaled as appropriate.

As can be seen from the graph, the chi squared indicator exhibits significant excursions in the period covered by units around 95 to 105, indicating that switch away rates for the channel concerned deviate significantly from expected switch away rate. Associated with atypically extended viewing times for the channel concerned, indicated by the data from households, this indicates that the atypically extended viewing times correspond to "real" viewing times, and that capping should not be applied to the relevant household viewing session data.

The excursions in the chi squared indicator might be understood to arise as follows. The first peak in the indicator, around unit 95, marks the end of a soccer or football game: many viewers switch to other channels more or less immediately. Some viewers stay with the channel for post-game commentaries and reviews but switch away at high rates in the following time units, as indicated by subsequent less marked peaks.

Smaller peaks, such as that shown around unit 80 may arise and may be ignored (as insignificant "noise"). Estimation of the minimum size of peak to be regarded as significant may be refined based on experience.

In other embodiments of the invention indicators other than the chi squared indicator may be used for identifying significant deviations in switch away rates indicative of atypically extended viewing times, as mentioned above.

It is possible, in other embodiments, that significant deviations of switch away rate for a channel may be determined not on the basis of a present day all-channel expected switch away rates but using historical switch away rates for the channel concerned, or channel group concerned, used as basis for expected switch away rates. However, this has the disadvantage of requiring storage of historical data.

This disclosure is illustrative and not limiting: further modifications will be apparent to those skilled in the art and are intended to fall within the scope of the appended claims.

Claims

1. An audience analysis system comprising a plurality of households and an audience monitoring facility, wherein:-

- in each of the plurality of households there can be received a plurality of selectable channels and there is provided a channel selector device operable to select from time to time one channel from amongst the plurality of channels, and a presentation device operable to present the selected channel to the household, the channel selector device providing data indicating which channels are selected and when channels are selected, thereby providing raw data indicating lengths of time for which selected channels remained selected, each household having means for returning said data to the audience monitoring facility,

- the audience monitoring facility including a data processor adapted to subject raw data returned from each of the plurality of households to a procedure in which information in the raw data from a household relating to the lengths of time for which channels remained selected by the channel selector device in the household concerned is subjected to capping, whereby the indicated length of time for which a channel remained selected is reduced if the indicated length of time exceeds a capping threshold length of time,

- the data processor being further operable to suspend such capping of raw data relating to a length of time for which a channel remained selected in a household when the data processor determines that the raw data concerned is more representative of household attention to presentation of the selected channel on the presentation device than is capped data, the data processor effecting this determination when the raw data from all the households of the system which selected the channel concerned is determined to provide similar indications of lengths of time, exceeding an otherwise applicable capping threshold length of time, for which the channel concerned remained selected.

2. An audience analysis system comprising a plurality of households and an audience monitoring facility, wherein:-

- in each of the plurality of households there can be received a plurality of selectable channels and there is provided a channel selector device operable to select from time to time one channel from amongst the plurality of channels, and a presentation device operable to present the selected channel to the household, the channel selector device providing data indicating which channels are selected and when channels are selected, thereby providing raw data indicating lengths of time for which selected channels remained selected, each household having means for returning said data to the audience monitoring facility,
- the audience monitoring facility including a data processor adapted to subject raw data returned from each of the plurality of households to a procedure in which information in the raw data from a household relating to the lengths of time for which channels remained selected by the channel selector device in the household concerned is subjected to capping, whereby the indicated length of time for which a channel remained selected is reduced to a capped length if the indicated length of time exceeds a capping threshold length of time, the capped length depending on the amount by which the capping threshold length of time is exceeded.

3. An audience analysis system comprising a plurality of households and an audience monitoring facility, wherein:-

- in each of the plurality of households there can be received a plurality of selectable channels and there is provided a channel selector device operable to select from time to time one channel from amongst the plurality of channels, and a presentation device operable to present the selected channel to the household, the channel selector device providing data indicating which channels are selected and when channels are selected, thereby providing raw data indicating lengths of time for which selected channels remained selected, each household having means for returning said data to the audience monitoring facility,
- the audience monitoring facility including a data processor adapted to subject raw data returned from each of the plurality of households to a procedure in which information in the raw data from a household relating to the lengths of time for which channels remained selected by the channel selector device in the household concerned is subjected to capping, whereby the indicated length of time for which a channel remained selected is reduced with a probability factor of unity to a capped length if the indicated length of time exceeds a capping threshold length of time, and if the indicated length of time for which a channel remained selected is below the capping threshold length of time the indicated length of time may be reduced, with a probability factor of less than unity, the probability factor increasing the longer is the indicated length of time.

4. An audience analysis system as claimed in claim 3, wherein the data processor is also adapted to subject raw data returned from each of the plurality of households to a procedure in which information in the raw data from a household relating to the lengths of time for which channels remained selected by the channel selector device in the household concerned is subjected to capping, whereby the indicated length of time for which a channel remained selected is reduced to a capped length if the indicated length of time exceeds a capping threshold length of time, the capped length depending on the amount by which the capping threshold length of time is exceeded

5. An audience analysis system as claimed in claim 2, 3 or 4, wherein the data processor is further operable to suspend capping of raw data relating to a length of time for which a channel remained selected in a household when the data processor determines that the raw data concerned is more representative of household attention to presentation of the selected channel on the presentation device than is capped data, the data processor effecting this determination when the raw data from all the households of the system which selected the channel concerned is determined to provide similar indications of lengths of time, exceeding an otherwise applicable capping threshold length of time, for which the channel concerned remained selected.

6. A system as claimed in claim 1 or 5, wherein the data processor is operable such that the raw data from all the households of the system which selected the channel concerned is determined to provide such similar indications of lengths of time when the similar lengths of time are determined to terminate at similar times, for example the similar lengths of time being determined to terminate at similar times when the incidence of similar time terminations thereof is greater
than that which would be expected as a result of random coincidence of such terminations, for example the incidence of similar time terminations that would be expected as a result of random coincidence of such terminations being determined on the basis of an average incidence of similar time terminations for all channels based on raw data for the current day, for example the incidence of similar time terminations of the similar lengths of time being determined to be greater than that which would be expected as a result of random coincidence of such terminations on the basis of a chi squared test based on expected similar time terminations and actual similar time terminations for the channel concerned.

7. A method of analysis of the audience in a plurality of households for channels selectable in each household by a household channel selector device for presentation on a household presentation device, the household channel selector devices providing raw data indicating which channels are selected and the lengths of time for which selected channels remain selected, the method comprising:-

subjecting the raw data relating to the lengths of time for which channels remain selected to a capping procedure, whereby the indicated length of time for which a channel remains selected is reduced if the indicated length of time exceeds a capping threshold length of time, to provide capped data,
however suspending such capping of raw data relating to a lengths of time for which channels remain selected when it is determined that the raw data concerned is more representative of audience attention to presentation of a selected channel on the presentation device than is capped data, this determination being effected when the raw data from all the households which selected the channel concerned is determined to provide similar indications of lengths of time, exceeding an otherwise applicable capping threshold length of time, for which the channel concerned remained selected.

8. A method of analysis of the audience in a plurality of households for channels selectable in each household by a channel selector device for presentation on a household presentation device, the channel selector devices providing raw data indicating which channels are selected and when channels are selected, thereby providing raw data indicating lengths of time for which selected channels remained selected, the method comprising:-

subjecting the raw data relating to the lengths of time for which channels remained selected to a capping procedure, whereby the indicated length of time for which a channel remained selected is reduced if the indicated length of time exceeds a capping threshold length of time, the capped length depending on the amount by which the capping threshold length of time is exceeded.

9. A method of analysis of the audience in a plurality of households for channels selectable in each household by a channel selector device for presentation on a household presentation device, the channel selector devices providing raw data indicating which channels are selected and when channels are selected, thereby providing raw data indicating lengths of time for which selected channels remained selected, the method comprising:-
subjecting the raw data raw data returned from each of the plurality of households to a procedure in which information in the raw data from a household relating to the lengths of time for which channels remained selected by the channel selector device in the household concerned is subjected to capping, whereby the indicated length of time for which a channel remained selected is reduced with a probability factor of unity to a capped length if the indicated length of time exceeds a capping threshold length of time, and if the indicated length of time for which a channel remained selected is below the capping threshold length of time the indicated length of time may be reduced, with a probability factor of less than unity, the probability factor increasing the longer is the indicated length of time.

10. A method of analysis as claimed in claim 9, further comprising subjecting the raw data relating to the lengths of time for which channels remained selected to a capping procedure, whereby the indicated length of time for which a channel remained selected is reduced if the indicated length of time exceeds a capping threshold length of time, the capped length depending on the amount by which the capping threshold length of time is exceeded.

11. A method of analysis as claimed in claim 8, 9 or 10, further comprising suspending such capping of raw data relating to a lengths of time for which channels remain selected when it is determined that the raw data concerned is more representative of audience attention to presentation of a selected channel on the presentation device than is capped data, this determination being effected when the raw data from all the households which selected the channel concerned is determined to provide similar indications of lengths of time, exceeding an otherwise applicable capping threshold length of time, for which the channel concerned remained selected.

12. A method as claimed in claim 8 or 11, such that the raw data from all the households which selected the channel concerned is determined to provide such similar indications of lengths of time when the similar lengths of time are determined to terminate at similar times, for example the similar lengths of time being determined to terminate at similar times when the incidence of similar time terminations thereof is greater than that which would be expected as a result of random coincidence of such terminations, for example the incidence of similar time terminations that would be expected as a result of random coincidence of such terminations being determined on the basis of an average incidence of similar time terminations for all channels based on raw data for the current day, for example the incidence of similar time terminations of the similar lengths of time being determined to be greater than that which would be expected as a result of random coincidence of such terminations on the basis of a chi squared test based on expected similar time terminations and actual similar time terminations for the channel concerned.

13. A system or method, as the case may be, as claimed in any of claims 1 to 12, wherein for example respective capping threshold lengths of time are provided for respective selectable channels, so that different capping threshold lengths of times can be applied to data relating to different channels, and/or wherein for example respective capping threshold lengths of time are provided for respective groups of selectable channels, so that different capping threshold lengths of time can be applied to data relating to channels belonging to different groups, and/or wherein for example respective capping threshold lengths of
time are provided for respective time of day periods at which a channel is selected, so that different capping threshold lengths of time can be applied to data relating to channels selected in different time of day periods, and/or wherein for example respective capping threshold lengths of time are provided for respective days of the week on which a channel is selected, so that different capping threshold lengths of time can be applied to data relating to channels selected on different days of the week and/or wherein for example the capping threshold lengths of time are derived from reference information indicating differences between measurements of lengths of time for which channels are selected by a channel selector device and measurements of lengths of time for which a presentation device is on and operative to present the channels, whereby periods of time for which channels are selected by the channel selector device but the presentation device is off and not operative to present channels can be taken into account to provide the capping threshold lengths of time.

FIG. 1

Fig. 2 : Distribution of length of viewing sessions

Viewing session length (Mins)

Fig. 3 : Average Homes Rating (all viewing) by Daypart

Fig 4 : Average Homes Rating (all viewing) by Daypart

FIG. 5

A

HOUSEHOLD STB DATA

B

Element in STB data stream, e.g.

Day: Monday
Daypart: = 06:30-9'09:30
Channel: No: 56
Channel Group: News
Service Type: TV
Viewing time (VT): 75 minutes

D

C

Extract matrix
element
corresponding to
the STB data
stream element to
return the capping
time limit (CT)
(e.g. 30

MULTI-DIMENSIONAL MATRIX ARRAY
OF CAPPING TIME LIMITS

Matrix Dimensions:-
   ❖  Time of Day (e.g. Daypart)
   ❖  Day of Week
   ❖  Channel
   ❖  Group of Channels
   ❖  Service Type (e.g. TV, Radio)
Each Matrix element contains a capping time
value:-

E.G. For Matrix element:-

Day: Monday
Daypart: = 06:30-9'09:30
Channel: No: 56
Channel Group: News
Service Type: TV
Time Viewed: 75 minutes

Capping Time Limit Value (CT) : 30 Minutes

E

Compare
viewing time
(VT) (e.g. 75
Minutes) and
extracted
capping time
limit (CT)
(e.g.30 Minutes

F

IF VT >CT, substitute CT for VT
in the STB data stream element:
If VT<=CT allow STB data
stream element to pass unchanged

EP 2 247 007 A1

Fig. 6

| | Europäisches Patentamt<br>European Patent Office<br>Office européen des brevets | **EUROPEAN SEARCH REPORT** | **Application Number**<br>EP 09 15 9222 |
|---|---|---|---|

### DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| X | US 2008/300965 A1 (DOE PETER CAMPBELL [US]) 4 December 2008 (2008-12-04)<br>* paragraphs [0020] - [0038], [0054], [0071] - [0073] *<br>----- | 1-13 | INV.<br>H04H60/64<br>H04H60/31 |
| D,X | EP 1 646 169 A (TAYLOR NELSON SOFRES PLC [GB]) 12 April 2006 (2006-04-12)<br>* paragraphs [0026] - [0045], [0054], [0118] - [0120] *<br>----- | 1-13 | |
| X | US 2003/145319 A1 (SATO HIROAKI [JP]) 31 July 2003 (2003-07-31)<br>* paragraphs [0042] - [0052], [0061], [0090] *<br>----- | 1-13 | |
| | | | **TECHNICAL FIELDS<br>SEARCHED (IPC)**<br><br>H04H |

The present search report has been drawn up for all claims

| Place of search | Date of completion of the search | Examiner |
|---|---|---|
| Munich | 9 October 2009 | Sanahuja, Francesc |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons
........................................................................
& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 09 15 9222

This annex lists the patent family members relating to the patent documents cited in the above-mentioned European search report.
The members are as contained in the European Patent Office EDP file on
The European Patent Office is in no way liable for these particulars which are merely given for the purpose of information.

09-10-2009

| Patent document cited in search report | | Publication date | Patent family member(s) | | Publication date |
|---|---|---|---|---|---|
| US 2008300965 | A1 | 04-12-2008 | WO 2008150575 | A2 | 11-12-2008 |
| EP 1646169 | A | 12-04-2006 | AU 2005291422 | A1 | 13-04-2006 |
| | | | CA 2582570 | A1 | 13-04-2006 |
| | | | WO 2006037631 | A2 | 13-04-2006 |
| | | | US 2006075421 | A1 | 06-04-2006 |
| | | | ZA 200702857 | A | 29-04-2009 |
| US 2003145319 | A1 | 31-07-2003 | JP 3836030 | B2 | 18-10-2006 |
| | | | JP 2003224829 | A | 08-08-2003 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 04256151 A